# EUROPEAN PATENT SPECIFICATION

(11) **EP 3 963 580 B1**
(45) Date of publication and mention of the grant of the patent: **15.10.2025**
(21) Application number: 19731559.1
(22) Date of filing: 03.06.2019
(51) Int. Cl.: G10L 21/10, G10L 25/78, G10L 15/26, G10L 21/06, H04N 21/488, H04N 21/439

(54) **AUTOMATICALLY CAPTIONING AUDIBLE PARTS OF CONTENT ON A COMPUTING DEVICE**
AUTOMATISCHE ERZEUGUNG VON UNTERTITELN FÜR AUDIOSEGMENTE IN MEDIENDATEN AUF EINER RECHENVORRICHTUNG
GÉNÉRATION AUTOMATIQUE DE CONTENU DES SEGMENTS AUDIO SUR UN DISPOSITIF INFORMATIQUE

(30) Priority: 02.05.2019 US 201962842017 P
(43) Date of publication of application: 09.03.2022
(73) Proprietor: Google LLC, Mountain View, CA 94043 (US)
(72) Inventor: BLOCK, Asa Jonas Ivry, Mountain View, California 94043 (US); BURFORD, Elliott Charles, Mountain View, California 94043 (US); TRIPALDI, Anthony Felice, Mountain View, California 94043 (US); PITARO, Stefanie Bianca, Mountain View, California 94043 (US); LUIPOLD, Heather Patricia, Mountain View, California 94043 (US); KEMLER, Brian, Mountain View, California 94043 (US); VAN DEMAN, Kelsie Hope, Mountain View, California 94043 (US); BAR, Nadav, 6789141 Tel Aviv (IL); BERRY, Robert James, Mountain View, California 94043 (US); COHEN, Daniel, Mountain View, California 94043 (US); RAMANOVICH, Michelle, Mountain View, California 94043 (US); HUME, Thomas Weedon, Mountain View, California 94043 (US); BLEUEL, Nicole Kiana, Mountain View, California 94043 (US); SCHLESINGER, Benjamin, 6789141 Tel Aviv (IL); LEE, Justin Wooyoung, Mountain View, California 94043 (US); ROCARD, Kevin, Mountain View, California 94043 (US); LAURENT, Eric, Mountain View, California 94043 (US)
(74) Representative: Derry, Paul Stefan
(86) International application number: PCT/US2019/035164
(87) International publication number: WO 2020/222851

(56) References cited:
- EP-A1- 3 220 372
- US-A1- 2017 278 525
- US-A1- 2018 061 439

## Description

### BACKGROUND

Other than professionally produced movies and television shows, most audible content is not captioned, and the content is therefore inaccessible to many users who have difficulty hearing or are otherwise unable to listen to the content. Some automatic captioning systems are available, but these systems can be expensive, complex, and difficult to maintain. Some automatic captioning systems require an audio output to a speaker as an input and may be less suited for providing captioning in quiet environments. To avoid costs and complexities involved in maintaining an automatic captioning system, some computing devices access cloud-based captioning services that require content to be uploaded to remote servers for captioning, thereby potentially reducing user privacy and convenience.

US2017/278525 discloses a content server accessing an audio stream, and inputs portions of the audio stream into one or more non-speech classifiers for classification, the non-speech classifiers generating, for portions of the audio stream, a set of raw scores representing likelihoods that the respective portion of the audio stream includes an occurrence of a particular class of non-speech sounds associated with each of the non-speech classifiers. The content server generates binary scores for the sets of raw scores, the binary scores generated based on a smoothing of a respective set of raw scores. The content server applies a set of non-speech captions to portions of the audio stream in time, each of the sets of non-speech captions based on a different one of the set binary scores of the corresponding portion of the audio stream.

### SUMMARY

The claims define the matter for protection.

A computing device is described for automatically captioning content as a local, system-level service. The computing device generates captions directly from audio data being output from content sources (*e.g.,* applications) unlike other captioning systems that often rely on information contained in audio signals being sent as inputs to speakers. The computing device analyzes metadata (comprising non-audio portions) tagged to the audio data to determine whether the audio data is suitable for captioning or whether the audio data is some other type of audio data (*e.g.,* system sound effect).

Responsive to identifying audio data for captioning, and responsive to determining that automatic captioning is enabled (*e.g.,* via user input), the computing device uses a machine-learned model to quickly generate a description of audible sounds interpreted from the audio data. The computing device can provide the descriptions of audible content visually (*e.g.,* as a persistent user interface element) no matter the application source of the audible content and regardless whether the computing device ever produces audio (*e.g.,* audible sound signals) of the content. In this way, the computing device captions system-level audio to describe audible parts of content, even if the audio data includes no embedded captions, even when the device does not use a server for captioning, and even when the computing device is muted and not outputting audible sounds.

By relying on original audio data as opposed to audio signals generated as input for speakers, the machine-learned model can generate captions that more-accurately represent the sounds from the content, as originally intended by the content source. Further, by determining whether audio data is suitable for captioning before using the machine-learned model, the computing device can avoid wasting resources by over-analyzing all audio data being output by content sources, including portions of the audio data which almost certainly include nothing for captioning. This enables the computing device to execute more efficiently, as a smaller and/or less complex machine-learned model can be used. For example, the machine-learned model can automatically recognize speech and analyze only the audio data which includes speech. As such, the machine-learned model can automatically recognize speech and automatically classify sounds locally, from the computing device that generates the audio data, thereby enhancing privacy and offline convenience. The computing device can therefore automatically caption system-level audio in a way that can at, a minimum, increase user satisfaction with automatic captioning systems. Users with a medical need may experience an increase to their quality of life through access to computing device 110, which automatically captions audio data in this way. A user who may have been unable to hear or understand the audible portions of content previously can now enjoy content just like any other users without a medical need.

Throughout the disclosure, examples are described where a computing device may analyze information (*e.g.,* audio data). However, the computing device may only use the information after the computing device receives explicit permission from a user of the computing device to use the data. For example, in situations discussed below in which the computing device analyzes audio data being output from applications executing at a computing device, individual users may be provided with an opportunity to provide input to control whether programs or features of the computing device can collect and make use of the audio data, *e.g.,* for automatic captioning. The individual users may have constant control over what programs can or cannot do with the audio data.

In addition, information collected may be pre-treated in one or more ways before it is transferred, stored, or otherwise used by the computing device and/or a remote computing system, so that personally-identifiable information is removed. For example, before an example computing device shares captions generated from audio data with another device (*e.g.,* to train a model executing at the other device), the example computing device may pre-treat the audio data to ensure that any user identifying information or device identifying information embedded in the data is removed. Thus, the user may have control over whether information is collected about the user and user's device, and how such information, if collected, may be used by the computing device and/or remote computing system.

The details of one or more implementations are set forth in the accompanying drawings and the following description. Other features and advantages will be apparent from the description and drawings, and from the claims. This summary is provided to introduce subject matter that is further described in the Detailed Description and Drawings. Accordingly, this summary should not be considered to describe essential features nor used to limit the scope of the claimed subject matter.

### BRIEF DESCRIPTION OF THE DRAWINGS

The details of one or more aspects of automatic captioning are described below. The use of the same reference numbers in different instances in the description and the figures indicate similar elements:
FIG. 1 is a conceptual diagram illustrating a computing device configured to automatically caption audio data.
FIG. 2 is another conceptual diagram illustrating a computing device configured to automatically caption audio data.
FIG. 3 is a conceptual diagram illustrating a machine-learned model of a computing device configured to automatically caption audio data.
FIG. 4 is a flow-chart illustrating example operations of a computing device configured to automatically caption audio data.
FIGS. 5A through 5H are each screen shots illustrating an example user interface of a computing device that automatically captions audio data.

### DETAILED DESCRIPTION

Other than professionally produced movies and television shows, most audible content is not captioned, and the content is therefore inaccessible to many users who have difficulty hearing or are otherwise unable to listen to the content. Manual and automatic captioning systems exist but suffer from various drawbacks.

For example, some manually captioning systems caption audible content based on embedded captioning information included in pre-recorded content. Other manual captioning systems caption content based on input from a human operator (*e.g.,* during a live broadcast).

Some automatic captioning systems are available, but these systems can be expensive, complex, and difficult to maintain. For example, an automatic captioning system may require an audio output to a sound system as a source for captioning. The captioning system may require the audio output to maintain a minimum sound level, making such a system less suited for operating in quiet environments. Furthermore, an audio output may include more audible sounds than just sounds for captioning (*e.g.,* system sounds, sounds from other background applications) and as such, captioning may take longer and waste resources unnecessarily and indiscriminately captioning all sound, from all audio sources of the computing device.

Some automatic captioning systems are application-based and may execute locally on a computing device. However, such systems may still require an internet connection to caption. For example, to avoid costs and complexities involved in maintaining an automatic captioning system, a computing device can access a cloud-based captioning service that requires content to be uploaded to remote servers for captioning, thereby potentially reducing user privacy and convenience.

Techniques are described for enabling automatic captioning of audible content efficiently and discriminately. The techniques do not require a network connection (*e.g.,* to the internet) and do not generate captions from audible signals passed on to a sound system. Instead, an example computing device can automatically generate captions from audio data collected by an audio mixer of the computing device. As used throughout, "audio data" refers to information sent to a system audio mixer or sound engine that is converted to audio signals for generating sound as output. The audio data is in contrast to the audio signals generated in response thereto.

An operating system or platform of the example computing device includes a system-level audio mixer that collects audio data being output from different content sources (*e.g.,* applications) and mixes the audio data to produce audio signals. The audio signals may get amplified by a sound system to produce audible sound. Unlike other captioning systems that indiscriminately caption audio signals, the example computing device discriminately captions audible content by only captioning audible content from audio data that is of a type suitable for captioning.

The computing device analyzes metadata (*e.g.,* non-audio portions of audio data) to determine whether audio data is suitable for captioning or whether the audio data is some other type of audio data (*e.g.,* system sound effect). Relying on metadata not found in audio signals enables the computing device to quickly filter out audio data that is not for captioning and therefore enables the computing device to avoid wasting resources like other captioning systems that try to caption all content, even content that cannot or should not be captioned.

Responsive to identifying audio data for captioning, and responsive to determining that automatic captioning is enabled (*e.g.,* via user input), the computing device uses a machine-learned model that has been trained using machine learning, to quickly generate a description of audible sounds interpreted from the audio data. For example, the computing device may rely on an end-to-end Recurrent-Neural-Network-Transducer Automatic Speech Recognition Model or other machine-learned model to determine a transcription of spoken audio or identify particular noises from non-spoken audio, as well as likely sources for the particular noises.

The computing device can provide the descriptions of audible content visually (*e.g.,* as a persistent user interface element) no matter the source of the audible content and regardless whether the computing device ever produces audio (*e.g.,* audible sound signals) of the content. In this way, the computing device executes system-level captioning operations that provide descriptions of audible parts of content, even if the content includes no embedded captions, and even if the computing device is muted and never outputs an audio signal.

By relying on audio data as opposed to audio signals being used as input to speakers, the machine-learned model generates captions that more accurately represent the sounds from the audible content, as originally intended by the content source. The audio data from an application or other content source may generally be a more accurate representation of audible content because the audio data is not altered since being output from the content source. Other automatic captioning systems may rely on a processed audio signal that is intended as an input to a speaker and therefore may introduce differences from that intended by the content source.

Furthermore, by determining whether audio data is suitable for captioning before tasking the machine-learned model for a description, the computing device avoids wasting resources overanalyzing all audio data being output by content sources, including portions of the audio data which almost certainly include nothing for captioning. This enables the computing device to train and execute a smaller and/or less complex machine-learned model to perform automatic speech recognition and automatic sound classification techniques. The model need not be trained additionally to ignore various types of audio data that are likely not suitable for captioning. This further enables the model to execute locally on the computing device where the audio data is generated, enhancing privacy and offline convenience.

Relying on more accurate data can increase the machine-learned model's accuracy and relying on only relevant data can increase the machine-learned model's efficiency which can further increase user satisfaction with automatic captioning systems. In addition, users with a medical need may experience an increase to their quality of life through access to computing device 110, which automatically captions audio data in this way.

The description can include a transcription of spoken content, in some cases, even identifying a name or description of a speaker. In some cases, the audible sounds include non-spoken content, for example, animal sounds, environment sounds, and other sound that may or may not be relevant for the description. The description may even include an explanation of some non-spoken sounds (*e.g.,* a dog bark) including identifying a corresponding source (*e.g.,* a barking dog).

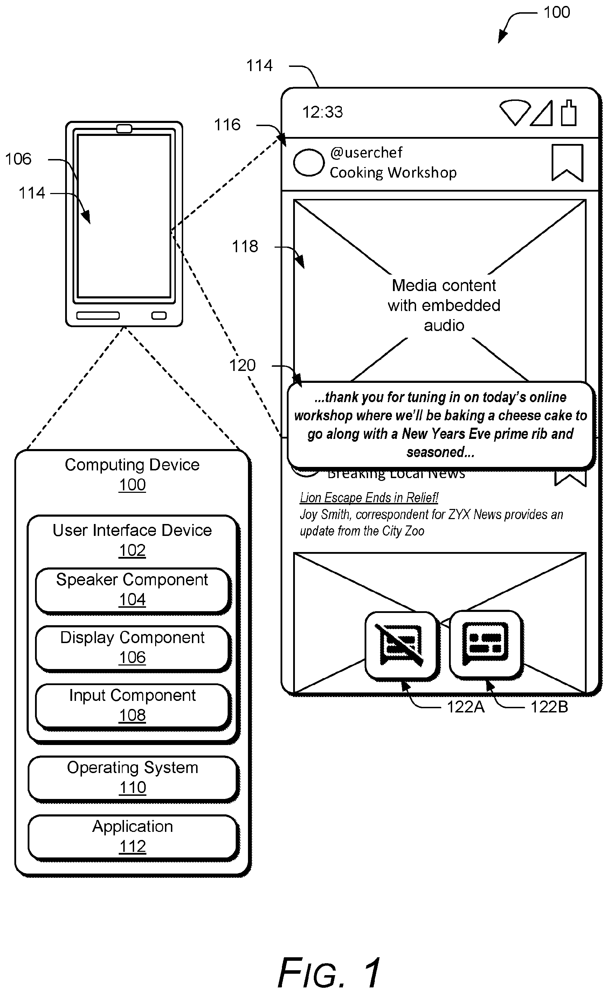

FIG. 1 is a conceptual diagram illustrating a computing device configured to automatically caption audio data. A computing device 100 may be any type of mobile or non-mobile computing device. As a mobile computing device, the computing device can be a mobile phone, a laptop computer, a wearable device (*e.g.,* watches, eyeglasses, headphones, clothing), a tablet device, an automotive/vehicular device, a portable gaming device, an electronic reader device, a remote-control device, or other mobile computing device. As a non-mobile computing device, the computing device 100 may represent a server, a network terminal device, a desktop computer, a television device, an entertainment set-top device, a streaming media device, a tabletop assistant device, a speaker devices, a sound system, non-portable gaming device, business conferencing equipment, or other non-mobile computing device.

The computing device 100 includes a user interface device 102 including a speaker component 104, a display component 106, and an input component 108. The computing device 100 also includes an operating system 110 and an application 112. These and other components the computing device 100 are communicatively coupled in various ways, including through use of wired and wireless buses and links. The computing device 100 may include additional or fewer components than what is shown in FIG. 1.

The operating system 110 generally controls functionality of the computing device 100, including the user interface device 102 and other peripherals. The operating system 110 provides an execution environment for application, such as the application 112. The operating system 110 may controls task scheduling, and other generally functionality, and generally does so through a system-level user interface 114.

The user interface device 102 manages input and output to the system-level user interface 114 controlled by the operating system 110. The system-level user interface 114 includes a persistent graphical element 120 for displaying automatic captions. The system-level user interface 114 further includes one or more caption control elements 122A and 122B that if selected, control whether the operating system 110 automatically caption audio data, including whether the user interface 114 displays the persistent graphical element 120 or not. In some cases, the caption-control elements 122A and 122B can include an icon indicative of whether the computing device 100 is automatically captioning the audio data or not. The system-level interface 114 may display user interfaces of other applications executing at the computing device 100, such as an application user interface 116 for the application 112.

The display component 106 and the speaker component 104 may be separate or integrated as a single component. The display component 106 can be made from any suitable display technology, including LED, OLED, and LCD technologies. The speaker component 104 (*e.g.,* a single speaker or multiple speakers) is configured to receive an audio signal as input and convert the audio signal to audible sound. The input component 108 may be a microphone, presence-sensitive device, touch screen, mouse, keyboard, or other type of component configured to receive user input.

The user interface device 102 may output information about inputs detected by the input component 108, and the operating system 110 may correlate the detected inputs to elements of the user interface 114. In response to receiving an input at the input component 108 (*e.g.,* a gesture), the operating system 110 and/or the application 112 may receive information from the user interface device 102, about the detected input. The operating system 110 or the application 112 may perform a function in response to the input. For example, the operating system 110 may determine that the input corresponds to a selection of either of the caption control elements 122A or 122B, and in response, automatically caption (or cease automatically captioning) audio data.

The application user interface 116 includes media content 118, such as a movie, animation, video, or other content with embedded audio. The media content 118 may be any multimedia or social media content, including from video platforms, streaming platforms, from radio, or from podcasts, from videos, from video chat applications, from phone applications, or from any other source of audio data executing or accessible from the computing device.

The application 112 may output the media content 118 to the operating system 110. Using the display component 106, the operating system 110 can cause the user interface device 102 to output, within the application user interface 116, images or other visual representations of the media content 118. The computing device 100 can further cause the user interface device 102 to forward audio signals generated from the media content 118 to the speaker component 104. In this way, the operating system 110 causes the speaker component 104 to output audio concurrently with the images or other visuals displayed at the display component 106.

In operation, the operating system 110 automatically captions audible parts of content. The computing device obtains audio data used for the captioning, from an audio mixer or sound engine of the operating system 110. The audio data from the application 112 may include the audible parts of the media content 118.

For example, as shown in FIG. 1, a user of the computing device 100 may interact with the application 112 by viewing the media content 118 being displayed on a screen of the display component 106. The user may want to enable captioning of the media content 118, however the media content 118 only includes uncaptioned audio data with no way for the application 112 to generate and embed captions into the media content 118.

Nevertheless, in response to receiving a user input (*e.g.,* a touch gesture at a location of the input component 108 that corresponds to a location of the screen of the display component 106 wherein the selectable control element 122B is displayed), the computing device 100 may automatically caption the audible parts of the media content 118 by processing the same audio data being output from the application 112 and received at the audio mixer.

The audio mixer is configured to collect all audio data output from various content sources executing within the execution environment of the operating system 110, including the application 112. The audio mixer provides an interface between the application source that generates the content and the speaker component 104 that creates sounds from the content. The audio mixer manages the raw audio data byte stream, analyzing the audio data, and directing audio signals to be output to the speaker component 104 or other suitable output component of the user interface device 102, to create sound.

Rather than indiscriminately caption all audio data from the audio signals sent to the speaker component 104, the operating system 110 uses metadata to focus the automatic captioning to audible parts of content that are for captioning. In other words, the operating system 110 identifies "caption-able" audio data based on metadata, and refrains from captioning all audio data unless all the audio data is deemed caption-able.

Some examples of metadata include a usage indicator specifying why an application source is outputting audio data. The audio mixer may use the usage indicator to control routing, focus, and volume decisions regarding the audio data. The metadata may include other flags, further specifying how sounds should be played, as well as information for audio/video synchronization.

The metadata includes a content type specifying what the application source is playing (*e.g.,* music, movie, speech, sonification, unknown). The content type can express a general category of the content (*e.g.,* one type of a movie streamlining service and another type of a music streaming service). The audio mixer can selectively configure some audio post-processing and adjust other settings from the type identifier. The type identifier may specify a movie type when the audio data is for a soundtrack that accompanies a movie or television program. The type identifier may specify a music type identifier when the content is a song (*e.g.,* not necessarily a soundtrack) and the type identifier may indicate a speech identifier when the content is spoken audio (*e.g.,* a news broadcast, a video or phone call). As another example, the content type may indicate sonification when the audio data is for a notification, alert, or sound used to accompany a user action (*e.g.,* a beep or sound effect expressing a key click) or event (*e.g.,* such as a sound for achieving a bonus during a game).

In addition to the audio mixer relying on the content type, the operating system 110 identifies audio data for captioning based on the content type identifier found in the metadata. For example, the operating system 110 automatically captions audio data of a type: movie, music, or speech, but not for some sonification type audio data or other audio data that is undefined or defined other ways. In this way, using the content type, the operating system 110 can determine whether the audio data is likely to have audio needing captioning or whether the audio data is likely indicative of some other sound not for captioning.

Responsive to determining that the type of the audio data associated with the media content 118 is for captioning, the operating system 110 determines a description of the audible parts of the content 118. For example, the operating system 110 may execute a machine-learned model (*e.g.,* an end-to-end Recurrent-Neural-Network-Transducer Automatic Speech Recognition Model) trained to generate descriptions of audible content as captions. The machine-learned model can be any type of model suitable for learning descriptions of sounds, including transcriptions for spoken audio. However, the machine-learned model used by the operating system 110 can be smaller in size, and less complex, as the machine-learned model needs to only be trained to identify sound and spoken audio from certain types of content. The machine-learned model need not process all audio data being sent to the audio mixer, rather, only certain audio data likely to include content for captioning. Contrast this to other captioning systems that require remote processing facilities and remote uploading of content, risking privacy and sacrificing convenience.

The operating system 110 receives the description from the machine-learned model and displays the description to the user. A description can include transcriptions of spoken dialogue or song. The descriptions may identify context for a sound or identify speakers, singers, or individual actors or performers. The descriptions may include sound descriptions, for example, "a dog barking" when audio of dog is detected or "door closing" for audio of a slamming door.

While displaying visual parts of the media content 118 within the application user interface 116, the operating system 110 outputs, for display, the description of the audible parts of the content. For example, the operating system 110 may present the persistent element 120 as an overlay of user interface 114 that appears on-top of the application user interface 116, and other graphical elements of the user interface 114. A user can manipulate the persistent element 120 to move to a different area of a display screen or enlarge or shrink the size of the element to show additional or fewer captions.

By relying on original audio data as opposed to audio signals generated as input for speakers, the machine-learned model of the operating system 110 generates captions that more accurately represent the sounds from the media content 118, as originally intended by the content source (*e.g.,* the application 112). Further, by determining whether audio data is for captioning before using the machine-learned model, the operating system 110 avoids wasting resources overanalyzing all audio data being output by the application 112 including that which almost certainly includes nothing for captioning. This enables the computing device 110 to execute a more efficient, smaller and/or less complex machine-learned model. As such, the machine-learned model can perform automatic speech recognition and automatic sound classification techniques locally, from the computing device 110 that generates the audio data, thereby enhancing privacy and offline convenience. The computing device 110 can therefore automatically caption system level audio in a way that can at a minimum, increase user satisfaction with automatic captioning systems. Users with a medical need may experience an increase to their quality of life through access to computing device 110, which automatically captions audio data in this way.

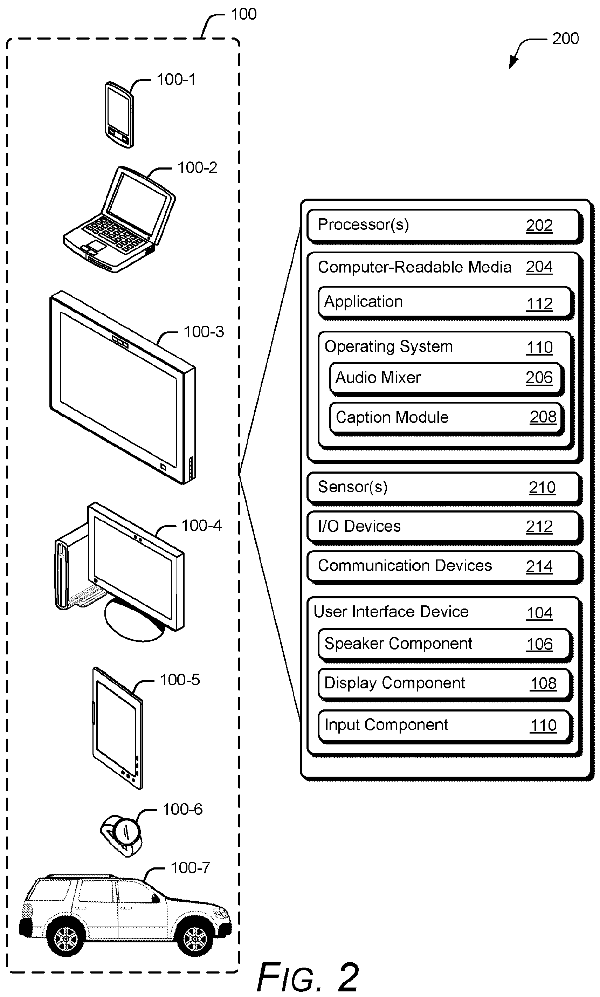

FIG. 2 is another conceptual diagram illustrating a computing device 200 configured to automatically caption audio data. The computing device 200 is an example of the computing device 100, with some additional detail. As shown in FIG. 2, the computing device 200 may be a mobile phone 100-1, a laptop computer 100-2, a television/display 100-3, a desktop computer 100-4, a tablet device 100-5, a computerized watch 100-6 or other wearable device, or a computing system installed in a vehicle 100-7.

In addition to each of the components shown in FIG. 1, the computing device 200 includes one or more processors 202, computer-readable media 204, one or more sensors 210, one or more input/output (I/O) devices 212, and one or more communication devices 214. The computer-readable media 212 includes instructions, that when executed by the processors 102, execute the application 112 and the operating system 110.

The processors 202 may include any combination of one or more controllers, microcontrollers, processors, microprocessors, hardware processors, hardware processing units, digital-signal-processors, graphics processors, graphics processing units, and the like. The processors 202 may be an integrated processor and memory subsystem (*e.g.,* implemented as a SoC), which processes computer-executable instructions to control operations of the computing device 200.

The sensors 210 obtain contextual information indicative of a physical operating environment of the computing device and/or characteristics of the computing device 200 while functioning in the physical operating environment. Examples of the sensors 210 include movement sensors, temperature sensors, position sensors, proximity sensors, ambient light sensors, moisture sensors, pressure sensors, and the like. The operating system 110 may tailor operations of the computing device 200 according to sensor information obtained by the sensors 210.

The input/output devices 212 provide connectivity to computing device 200 and other devices and peripherals, including data network interfaces that provide connection and/or communication links between the device, data networks (*e.g.,* a mesh network, external network, etc.), and other devices. Input/output devices 212 can be used to couple the computing device 200 to any type of components, peripherals, and/or accessory devices. Input/output devices 212 also include data input ports via which any type of data, media content, and/or inputs can be received, such as user inputs to the computing device 200, as well as any type of communication data, as well as audio, video, and/or image data received from any content and/or data source.

The communication devices 214 enable wired and/or wireless communication of device data 506, such as any type of media content generated or received applications executing on the computing device 200, such as the application 112. The communication devices 214 can also include transceivers for cellular phone communication and/or for network data communication.

The computer-readable media 204 is configured to provide computing device 200 with persistent and non-persistent storage of executable instructions (*e.g.,* firmware, recovery firmware, software, applications, modules, programs, functions, and the like) and data (*e.g.,* user data, operational data) to support execution of the executable instructions. Examples of the computer-readable media 204 include volatile memory and non-volatile memory, fixed and removable media devices, and any suitable memory device or electronic data storage that maintains executable instructions and supporting data. The computer-readable media 204 can include various implementations of random-access memory (RAM), read only memory (ROM), flash memory, and other types of storage memory in various memory device configurations. The computer-readable media 204 excludes propagating signals. The computer-readable media 204 may be a solid-state drive (SSD) or a hard disk drive (HDD). The computer-readable media 204 in the example of FIG. 2 includes the application 112 and the operating system 110.

The operating system 110 of computing device 200 includes an audio mixer 206 and a caption module 208. The audio mixer 206 and the caption module 208 may be implemented as specialized hardware or software components of the operating system 110. In other examples, the audio mixer 206 or the caption module 208 may be implemented separate from the operating system 110, *e.g.,* as a system plug-in or additional add-on service locally installed on the operating system 110.

The audio mixer 206 is configured to consolidate audio data generated by applications executing within the operating environment provided by the operating system 110. The audio mixer 206 combines audio streams from applications, such as the application 112, and generates audio output signals that reproduce the sounds encoded in the audio streams when combined and output from the speaker component 206. The audio mixer 206 may adjust the audio signals in other ways, for example, controlling focus, intent, and volume.

The caption module 208 is configured to automatically caption audio data, in raw form, as received (*e.g.,* as a byte stream) by the audio mixer 206. Rather than process all post-mixed audio signals for captioning, the caption module 208 identifies individual, pre-mixed, streams of audio data received at the audio mixer 206 that are suitable for captioning. For example, the caption module 208 may automatically caption spoken audio type audio data but not notification or sonification type audio data, such as system beeps and rings. The caption module 208 may apply a filter to the byte streams received by the audio mixer 206 to identify the audio data that is of type suitable for captioning. The caption module 208 uses a machine-learned model to determine descriptions of sounds represented by audio data that is identified for captioning.

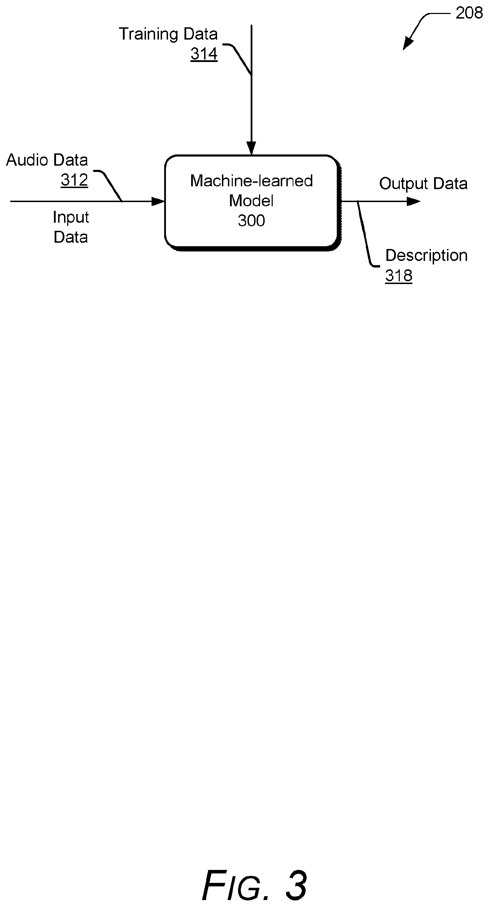

FIG. 3 is a conceptual diagram illustrating a machine-learned model of a computing device configured to automatically caption audio data. The machine-learned model 300 may be part of the caption module 208. That is, the caption model 208 may include the machine-learned model 300 to automatically convert coded audio data into detailed descriptions or captions of the audible content without necessarily converting the audio data into sound. The computing device 200 may execute the machine-learned model 300 as part of executing the caption module 208, to determine the description 318 of the audible parts of the content found in the audio data 312. The machine-learned model 300 may include one or more types of machine-learned models combined into a single model that provides the descriptions 318 in response to the audio data 312.

The machine-learned model 300 is configured to perform inference; the machine-learned model 300 is trained to receive audio data 312 as input and provide, as output data, descriptions 318 (*e.g.,* captions) of sounds determined by the machine-learned model 300 from the audio data 312. Apart from any annotations (*i.e.,* annotated data) contained in the audio data 312, the audio data 312 may include unannotated data that has not been annotated for captioning. Through performing inference using the machine-learned model 300, the caption module 208 processes the audio data 312 locally, and from within a secure enclave of the operating system 110 to ensure user privacy and security.

The machine-learned model 300 can be or include one or more of various types of machine-learned models. In addition, machine learning techniques described herein that are used to train the machine-learned model 300 may be readily interchangeable and combinable. Although certain example techniques have been described, many others exist and can be used in conjunction with aspects of the present disclosure. The machine-learned model 300 can perform classification, regression, clustering, anomaly detection, recommendation generation, and/or other tasks.

The machine-learned model 300 can be trained using supervised learning techniques, for example, the machine-learned model 300 can be trained based on a training dataset that includes examples of descriptions inferred from corresponding examples of audio data. The machine-learned model 300 can by trained using unsupervised learning techniques as well.

The machine-learned model 300 can be or include one or more artificial neural networks (a type of "neural network"). As a neural network, the machine-learned model 300 can include a group of connected or non-fully connected nodes, referred to as neurons or perceptrons. As a neural network, the machine-learned model 300 can be organized into one or more layers and can in some cases include multiple layers when configured as a "deep" network. As a deep network, the machine-learned model 300, can include an input layer, an output layer, and one or more hidden layers positioned between the input layer and the output layer.

The machine-learned model 300 can be or include one or more recurrent neural networks. For example, the machine-learned model may be implemented as an end-to-end Recurrent-Neural-Network-Transducer Automatic Speech Recognition Model. Example recurrent neural networks include long short-term (LSTM) recurrent neural networks, gated recurrent units, bi-direction recurrent neural networks, continuous time recurrent neural networks, neural history compressors, echo state networks, Elman networks, Jordan networks; recursive neural networks, Hopfield networks, fully recurrent networks, and sequence-to-sequence configurations.

At least some of the nodes of a recurrent neural network can form a cycle. When configured as a recurrent neural network, the machine-learned model 300 can be especially useful for processing input data that is sequential in nature, such as audio data 312 which has an inherent sequential nature. A recurrent neural network can pass or retain information from a previous portion of an input data sequence to a subsequent portion of the input data sequence through use of recurrent or directed cyclical node connections. For example, the machine-learned model 300 can pass or retain information from a previous portion of the audio data 312 to a subsequent portion of the audio data 312 through use of recurrent or directed cyclical node connections between the previous and subsequent portions.

By definition, the audio data 312 is sequential and can include time-series data (*e.g.,* sound data versus time). As a recurrent neural network, the machine-learned model 300 can analyze the audio data 312 over time to detect or predict spoken sounds and non-spoken, but relevant sounds, for generating captions of the audio data 312. More specifically, the sequential sounds from the audio data 312 can indicate spoken words in a sentence (*e.g.,* for natural language processing, speech detection or processing).

The machine-learned model 300 can be or include one or more convolutional neural networks. A convolutional neural network can include one or more convolutional layers that perform convolutions over input data using learned filters or kernels. Convolutional neural networks are known for usefulness for diagnosing vision problems, such as when analyzing imagery input data, such as still images or video. However, convolutional neural networks can also be applied for natural language processing of sound data as well, such as when generating captions from sequential audio data 312.

The machine-learned model 300 can be trained using machine learning to receive the audio data 312 as input data and, in response, provide the descriptions 318 as output data. The input data can include different types, forms, or variations of audio data. As examples, in various implementations, the audio data 312 can include raw, pre-mixed audio byte stream data passed from an application to an audio mixer and the audio data 312 can include processed byte stream data as well.

In response to receipt of the audio data 312, the machine-learned model 300 can provide the descriptions 318. The output data can include different types, forms, or variations of output data. As examples, in various implementations, the output data can include descriptions of audible content that corresponds to visual content being displayed.

The machine-learned model 300 can be trained in an offline fashion or an online fashion. In offline training (also known as batch learning), the machine-learned model 300 model is trained on the entirety of a static set of training data, and in online learning, the machine-learned model 300 is continuously trained (or re-trained) as new training data becomes available (*e.g.,* while the machine-learned model 300 is used to perform inference). For example, the machine-learned model 300 can be initially trained to replicate captions that have been already applied to audible content (*e.g.,* movie captions). As the machine-learned model 300 is used to infer descriptions of the audio data 312, the descriptions, and the corresponding portions of the audio data 312 can be fed back to the machine-learned model 300, as new training data to enable the machine-learned model 300 to continuously improve descriptions. A user may be provided an opportunity to provide input to the machine-learned model 300 to flag a particular description as having errors. The signal that a description may be wrong can also be used to train the machine-learned model 300 to improve future predictions.

As part of the caption module 208, the machine-learned model 300 may be part of the operating system 110 and therefore, may be included in a secure enclave to securely and privately process audio data for automatic captioning. Applications that interact with the operating system 110 may interact with the machine-learned model 300 to process the audio data 312 into the descriptions 318. For example, the application 112 may can communicate through the operating system 110 with the model 300, using an application programming interface (API) (*e.g.,* a common, public API across all applications).

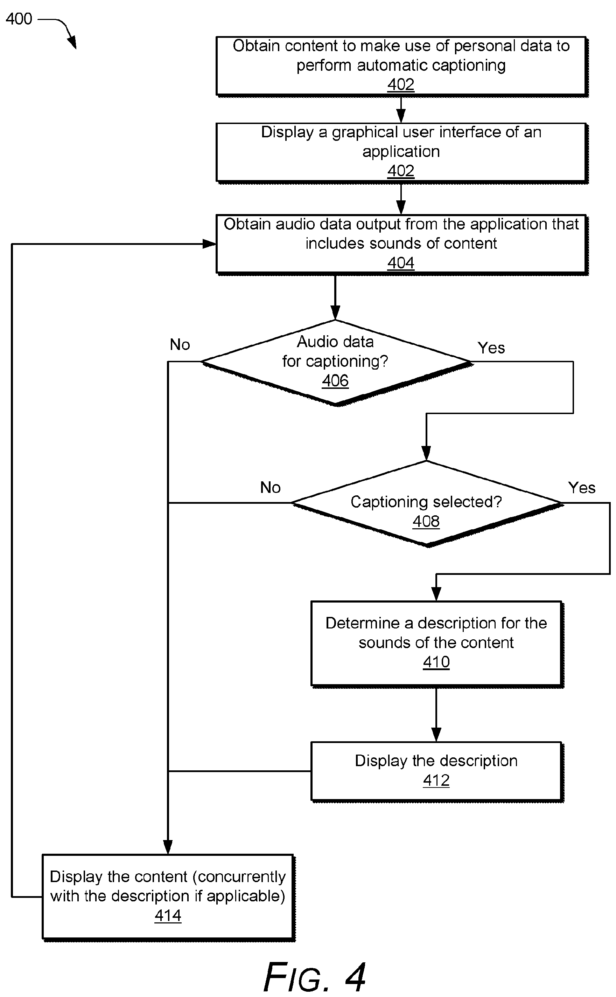

FIG. 4 is a flow-chart illustrating example operations 400 of a computing device configured to automatically caption audio data. The computing devices 100 or 200 of FIGS. 1 and 2 may perform the operations 400. The operations 400 can be performed in a different order than that shown in FIG. 4, including additional or fewer operations. The operations 400 are described below in the context of computing device 200

At 402, the computing device 200 obtains consent to make use of personal data to perform automatic captioning. For example, the computing device 200 may only use audio data to generate captions after the computing device 200 receives explicit permission from a user of the computing device 200 to use the audio data.

At 404, the computing device 200 displays a graphical user interface of an application. For example, the computing device 200 may direct the display component 108 to present the user interface 114 and show the application user interface 116.

At 404, the computing device 200 obtains audio data from the application that includes audible parts of content. For example, the application 112 may render and play the media content 118. To provide captioning, for example, if the media content 118 does not include annotated captions, the caption module 208 may extract the audio data being output from the application 112, as the audio data is received at the audio mixer 206.

At 406, the computing device 200 determines whether the audio data is suitable for captioning. For example, the caption module 208 may filter out audio data that is of a type that does not need captioning, such as notification sounds and other types of sound that accompany content. The caption module 208 determines whether the audio data is for captioning optionally based on the type identifier found in metadata embedded in the audio data. The caption module 208 determines whether the audio data is for captioning optionally based on the metadata indicating annotations (pre-created captions) are included in the audio data. In response to determining the audio data already has captions, the caption module 208 may forgo performing automatic captioning and display the pre-populated captions within a description.

The operating system 110 and the audio mixer 206 may define various types of audio data that applications may assign to outputs. Like other applications executing at the computing device 200, the application 112 uses an API to output audio data to the audio mixer 206. The API includes a parameter for designating audio data type within metadata, for example, to assist the audio mixer 206 in correctly mixing and distributing audio output determined from the data. Instead of relying on the audio data type to direct sounds, the caption module 208 uses the type identifier found in the metadata to quickly and easily determine whether to perform captioning or not. Specifically, the caption module 208 may key on specific types of audio data, specific formats, durations, or other qualities and characteristics of the audio data, to determine whether the audio data can be captioned. Some types of audio data that may be suitable for captioning include movie type audio data, music type audio data, and spoken type audio data. In contrast, sonification type audio data and other undefined audio data types may be unsuitable for captioning, as the sounds are not meant to convey content, but rather, an event or user action.

If the audio data is not for captioning, at 414, the computing device 200 displays visual parts of the content. For example, the computing device 200 may display the media content 118 at the display component 108.

However, if at 408, the computing device 200 determines the audio data is for captioning, the computing device 200 determines still whether to automatically caption the data based on whether automatic captioning is selected by the user. For example, at 414, in cases where the user has not enabled automatic captioning in a settings menu of the user interface 114 or the operating system 110, the computing device 200 refrains from automatically captioning the audio data and instead displays visual parts of the content, without generating a descriptive caption. When the user has enabled automatic captioning by selecting an appropriate option from a settings menu or the like, at 410, the caption module 208 uses a machine-learned model to determine a description for the audible parts of the content. For example, the caption module 208 may execute an end-to-end automatic speech recognition model based on a recurrent-neural-network that is trained to take raw audio data being output from an application, such as the application 112, and identify spoken words and unspoken sounds from the audio data to ultimately transcribe the spoken words to written words and convert the unspoken sounds to written descriptions of the sounds for displaying as captions.

The caption module 208 can improve the accuracy of transcripts and written descriptions of sounds in various ways, including by biasing the end-to-end automatic speech recognition model based on context of the computing device 200. For example, the caption module 208 may bias the model based on visual parts of the content or other information displayed on a screen. For example, when generating descriptions of audible portions of a presentation (e.g., a slide show) that includes an audible narration, the end-to-end automatic speech recognition model could be biased using portions of text or images contained in slides of the presentation to generate the descriptions, thereby improving accuracy of the descriptions. The caption model 208 can use other types of contextual information, such as location information and information about other applications executing on the computing device 200 to bias the machine-learned model.

At 412, the computing device 200 displays the description. For example, the caption module 208 may output an indication of a description being generated as the machine-learned model 300 receives the raw audio stream from the application 112.

The computing device 200 can in some cases translate parts of the description before displaying the description. For example, the caption module 208 may determine from the operating system 110, a preferred language of a user, and optionally translate audio content while generating a description so that text of the description is written in the preferred language of the user, rather than an original language of the audio content. In this way, a user from Japan, for example, can view descriptions of audible content in Japanese, or other preferred language, even if the audio of the content is recorded in a different language, such as Chinese or English.

At 414, the computing device 200 displays visual parts of the content concurrently with the description. The operating system 110 may format the description into a persistent graphical element that the user can move around atop the application user interface, to read a description of the audible parts of the media content 118 being output for display.

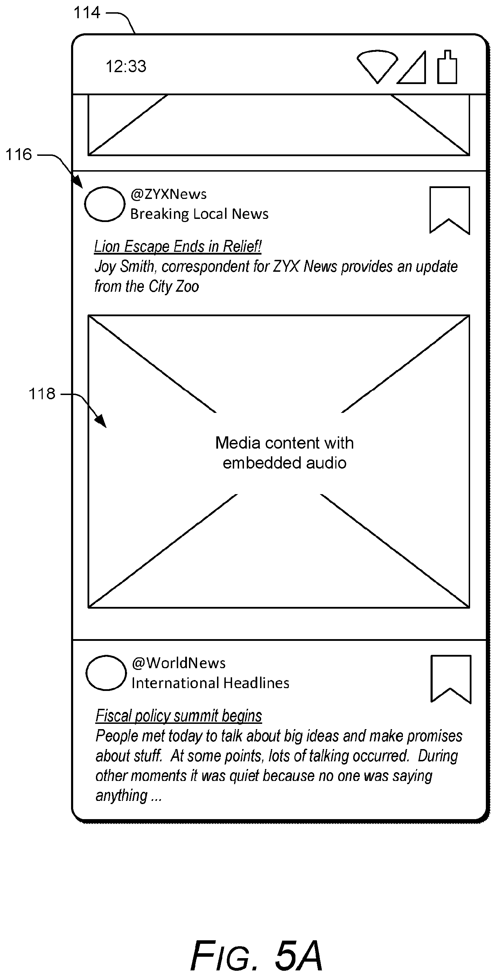

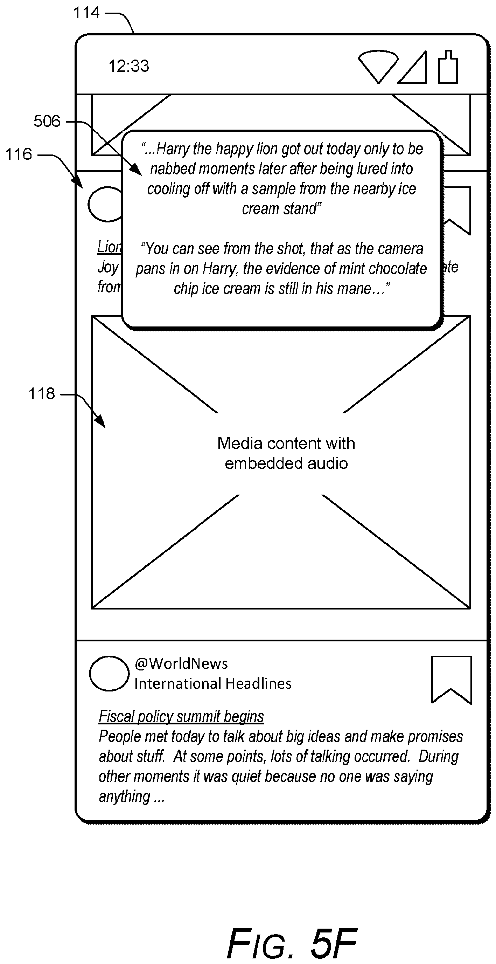

FIGS. 5A through 5H are each screen shots illustrating an example user interface of a computing device that automatically captions audio data. FIGS. 5A through 5H are described in succession and in the context of the computing device 200.

In the example of FIG. 5A, the computing device 200 displays the user interface 114 at the display component 108. The user interface 114 is associated with the operating system 110 and shows the application user interface 116 that is controlled by the application 112. Within the application user interface 116, the application 112 includes the media content 118.

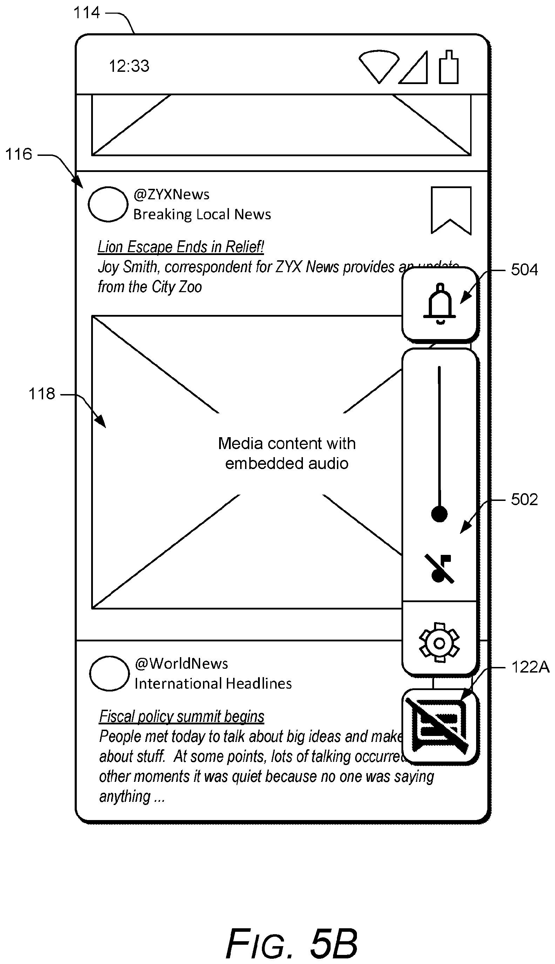

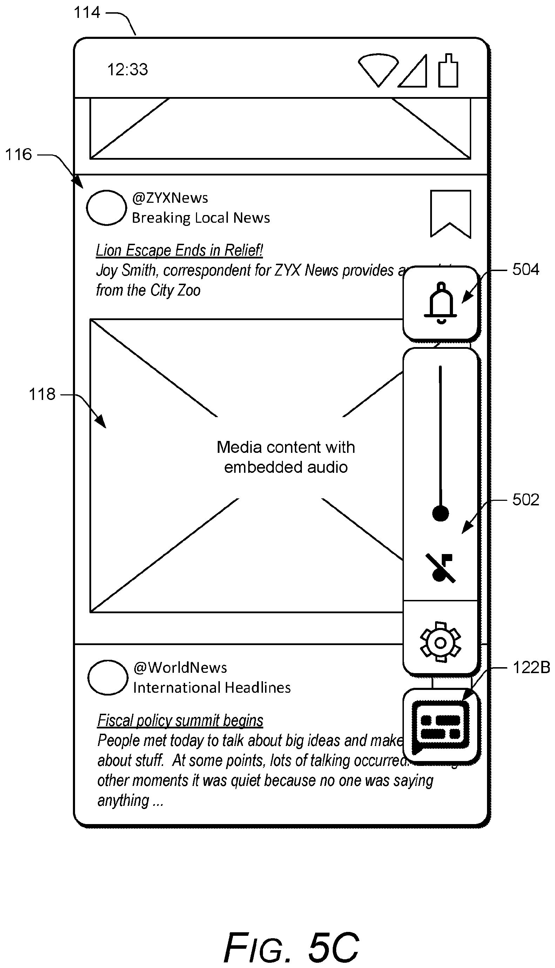

FIG. 5B is a screenshot of the user interface 114 in response to receiving a user input to show a settings menu 502. In the example of FIG. 5B, the settings menu 502 is an audio settings menu for adjusting volume controls, alert settings 504, mute controls, etc. In addition, below the settings menu, the computing device 200 displays the caption control element 122A. The computing device 200 determines a user input to automatically caption the audio data in response to detecting a user selection of the caption-control element 122A. For example, FIG. 5C shows the caption-control element 122B having replaced the caption-control element 122A in response to the selection.

In some cases, in response to receiving a selection of the caption control element 122B, the computing device 200 automatically ceases from captioning the audible parts of the content on the computing device 200. In this way, control elements 122A and 122B provide a user with an ability to quickly start and stop automatic captioning.

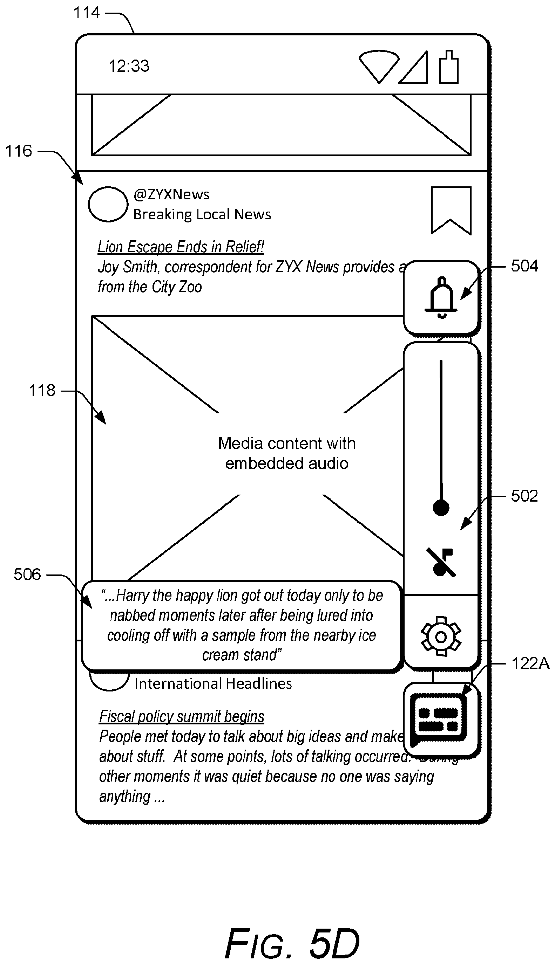

In FIG. 5D, in response to the selection, the computing device automatically captions the audio data output from the application 112 using a machine-learned model. The computing device 200 generates a description for audible parts of the media content 118 based on an output from the caption module 208 including a confidence level associated with the output.

The operating system 110 may cause the display component 108 to display the description within a persistent element 506 that the operating system 110 includes within the user interface 114. In some cases, the operating system 110 may display the persistent element 506 while refraining from outputting the audible parts of the content using the speaker component 106 (*e.g.,* a speaker, headphone jack, or other sound system of the computing device 200). Unlike other captioning systems, computing system 200 can caption content without generating audible sound. In other cases, the operating system 110 may provide a hearing assistant function and display the persistent element 506 while concurrently outputting the audible parts of the content using the speaker component 106 (*e.g.,* a speaker, headphone jack, or other sound system of the computing device 200).

In the example of 5E, the computing device 200 moves the persistent element 506 from a first location of the user interface 114 to a second location of the user interface 114, demonstrating how the persistent element 506 is separate and distinct from the media content 118. A user of computing device 200 can provide gestures at a location of the input component 110 that corresponds to the first location of the user interface and drag the input to a different location of the input component that corresponds to the second location of the user interface 114. The computing device 200 may cause the persistent element 506 to move with the gesture.

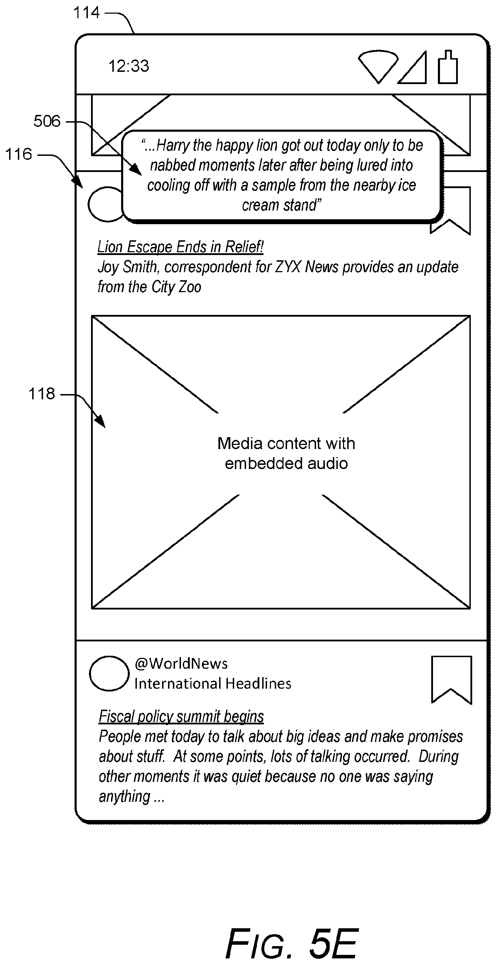

In this way, the example of FIG. 5E shows that responsive to receiving user input associated with the persistent element 506, the computing device 200 may move the persistent element away from a first portion of the application user interface 116 and the user interface 114 to obscure a second, different portion of the application user interface 116 and the user interface 114. This may enable a user to multi-task, *e.g.*, scroll through content displayed within the user interface 116 while the audio data is being captioned and consistently displayed on top of the user interface 114.

In the example of 5F, the computing device 200 enlarges the persistent element 506 from a first size to a second (larger or smaller) size, demonstrating how the persistent element 506 may be customizable. A user of computing device 200 can provide gestures at a location of the input component 110 that corresponds to the persistent element 506 to stretch the persistent element or shrink the persistent element. In some cases, responsive to receiving user input associated with the persistent element 506, the computing device 200 may modify the size of the persistent element 506 to display previous or subsequent descriptions generated from the audible parts of the content. In this way, the computing device 200 may cause the persistent element 506 to change in size with changes in size to the user input (*e.g.,* gesture), and as a result adjust how much description is included in the persistent element 506, at a particular time.

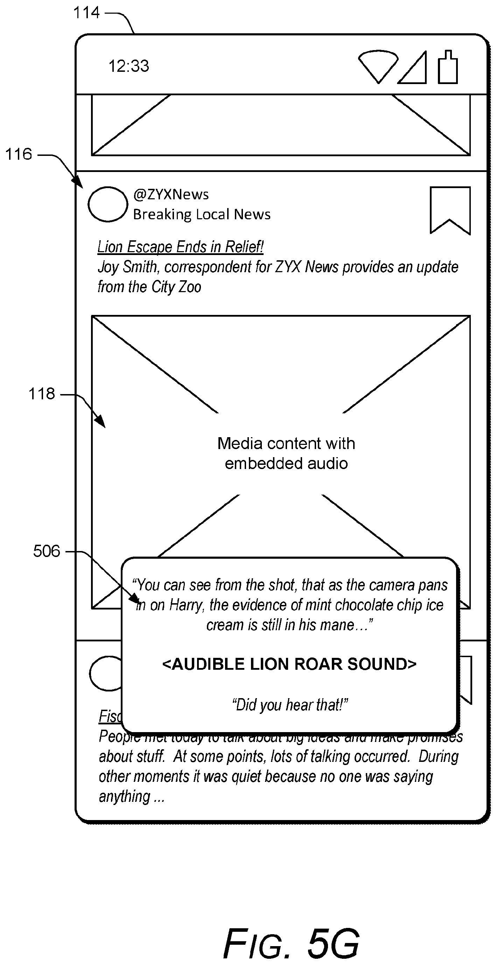

In the example, of FIG. 5G, the description of the audible parts of the content being displayed in the persistent element 506 includes text identifying a spoken or non-spoken source for different portions of the audible parts of the content. For example, the persistent element 506 indicates that the machine-learned model of the caption module 208 identified a loud roaring sound that is likely coming from a lion. Also included in the persistent element 506 with text indicating non-spoken audio is a transcription of spoken audio from the audible parts of the content. For example, the transcription of the news reporter's dialogue in the media content 118 is displayed in and around the indication of the lion roar, to provide an easy to follow caption of the media content 118.

In general, the computing device 200 may include descriptions of noises, and indications of sources for the noise, as part of the description within persistent element 506. The noises may include animal noises from animal sources, environmental noises from environmental sources, and the like. The machine-learned model of the caption module 208 is trained to identify spoken and non-spoken audio from audio data and describe the audio with sufficient description for a user of the computing device 200 to understand the audible content.

Various preferred embodiments of the disclosure are described in the foregoing description and shown in the drawings. The scope of protection is, however, as defined by the following claims.

## Claims

1. A computer-implemented method comprising:
obtaining, by a processor of a computing device from an audio mixer of the computing device, audio data output from an application executing at the computing device, the audio data comprising non-metadata indicative of audible parts of content output by the application and metadata tagged to the audio data and including a type identifier specifying a content type, and wherein the content also comprises visual parts;
determining, by the processor, whether the type specified by the type identifier of the metadata tagged to the audio data is a type of content that is suitable for captioning;
responsive to determining that the type identifier is of a type that is suitable for captioning, determining, by the processor and for captioning, a description of the audible parts of the content; and
while outputting the visual parts of the content for display, outputting, by the processor, the description of the audible parts of the content for display.

2. The method of claim 1, wherein the description of the audible parts of the content comprises a transcription of spoken audio from the audible parts of the content.

3. The method of any of claims 1 or 2, wherein the description of the audible parts of the content comprises a description of non-spoken audio from the audible parts of the content.

4. The method of claim 3, wherein the non-spoken audio comprises a noise from a particular source and the description of the noise from the particular source comprises an indication of the particular source.

5. The method of claim 4, wherein:
the noise comprises an animal noise from an animal source, or
the noise comprises an environmental noise from a non-animal source.

6. The method of any of claims 1-5, wherein determining the description of the audible parts of the content comprises executing, by the processor of the computing device, a machine-learned model that is trained to determine descriptions from the audio data to determine the description of the audible parts of the content.

7. The method of claim 6, wherein the machine-learned model comprises an end-to-end Recurrent-Neural-Network-Transducer Automatic Speech Recognition Model.

8. The method of any of claims 1-7, wherein the description comprises text indicating non-spoken audio extracted from the audible parts of the content.

9. The method of any of claims 1-8, wherein the description comprises text identifying a human and a non-human source for different portions of the audible parts of the content.

10. The method of any of claims 1-9, wherein outputting the description of the audible parts of the content comprises outputting the description of the audible parts of the content as a persistent graphical element apart from visual parts of the content and apart from a graphical user interface of the application.

11. The method of claim 10, further comprising:
responsive to receiving, by the processor, a user input associated with the persistent graphical element, modifying a size of the persistent graphical element to display previous or subsequent descriptions generated from the audible parts of the content.

12. A computing device comprising at least one processor configured to perform any of the methods of claims 1-11.

13. A computer-readable storage medium comprising instructions that, when executed, configure a processor of a computing device to perform any of the methods of claims 1-11.

## Patentansprüche

1. Computerimplementiertes Verfahren, umfassend:
Erlangen von Audiodaten, die von einer auf der Rechenvorrichtung ausgeführten Anwendung ausgegeben werden, durch einen Prozessor einer Rechenvorrichtung von einem Audiomischer der Rechenvorrichtung, wobei die Audiodaten Nichtmetadaten umfassen, die hörbare Teile des von der Anwendung ausgegebenen Inhalts angeben, und Metadaten, die mit den Audiodaten verknüpft sind und einen Typ-Bezeichner beinhalten, der einen Inhaltstyp angibt, und wobei der Inhalt auch visuelle Teile umfasst;
Bestimmen durch den Prozessor, ob der Typ, der durch den Typ-Bezeichner der Metadaten bestimmt ist, die mit den Audiodaten verknüpft sind, ein Inhaltstyp ist, der zum Untertiteln geeignet ist;
als Reaktion auf das Bestimmen, dass der Typ-Bezeichner von einem Typ ist, der zum Untertiteln geeignet ist, Bestimmen einer Beschreibung der hörbaren Teile des Inhalts durch den Prozessor und zum Untertiteln; und
während dem Ausgeben der visuellen Teile des Inhalts zur Anzeige, Ausgeben der Beschreibung der hörbaren Teile des Inhalts zur Anzeige durch den Prozessor.

2. Verfahren nach Anspruch 1, wobei die Beschreibung der hörbaren Teile des Inhalts eine Transkription von gesprochenem Audio aus den hörbaren Teilen des Inhalts umfasst.

3. Verfahren nach einem der Ansprüche 1 oder 2, wobei die Beschreibung der hörbaren Teile des Inhalts eine Beschreibung von nicht gesprochenem Audio aus den hörbaren Teilen des Inhalts umfasst.

4. Verfahren nach Anspruch 3, wobei das nicht gesprochene Audio ein Rauschen von einer bestimmten Quelle umfasst und die Beschreibung des Rauschens von der bestimmten Quelle eine Angabe der bestimmten Quelle umfasst.

5. Verfahren nach Anspruch 4, wobei:
das Rauschen ein Tiergeräusch von einer tierischen Quelle umfasst oder
das Rauschen ein Umgebungsgeräusch aus einer nichttierischen Quelle umfasst.

6. Verfahren nach einem der Ansprüche 1-5, wobei das Bestimmen der Beschreibung der hörbaren Teile des Inhalts das Ausführen eines Maschinenlernmodells durch den Prozessor der Rechenvorrichtung umfasst, das trainiert ist, Beschreibungen aus den Audiodaten zu bestimmen, um die Beschreibung der hörbaren Teile des Inhalts zu bestimmen.

7. Verfahren nach Anspruch 6, wobei das Maschinenlernmodell ein End-to-End-Recurrent-Neural-Network-Transducer-Modell für die automatische Spracherkennung umfasst.

8. Verfahren nach einem der Ansprüche 1-7, wobei die Beschreibung Text umfasst, der nicht gesprochenes Audio angibt, das aus den hörbaren Teilen des Inhalts extrahiert wurde.

9. Verfahren nach einem der Ansprüche 1-8, wobei die Beschreibung Text umfasst, der eine menschliche und eine nichtmenschliche Quelle für verschiedene Abschnitte der hörbaren Teile des Inhalts identifiziert.

10. Verfahren nach einem der Ansprüche 1-9, wobei das Ausgeben der Beschreibung der hörbaren Teile des Inhalts das Ausgeben der Beschreibung der hörbaren Teile des Inhalts als persistentes grafisches Element getrennt von visuellen Teilen des Inhalts und getrennt von einer grafischen Benutzeroberfläche der Anwendung umfasst.

11. Verfahren nach Anspruch 10, ferner umfassend:
als Reaktion auf das Empfangen einer dem persistenten grafischen Element zugeordneten Benutzereingabe durch den Prozessor, Ändern einer Größe des persistenten grafischen Elements, um vorherige oder nachfolgende Beschreibungen anzuzeigen, die aus den hörbaren Teilen des Inhalts erzeugt wurden.

12. Rechenvorrichtung, umfassend mindestens einen Prozessor, der dazu konfiguriert ist, eines der Verfahren nach Anspruch 1-11 durchzuführen.

13. Computerlesbares Speichermedium, das Anweisungen umfasst, die, wenn sie ausgeführt werden, einen Prozessor einer Rechenvorrichtung dazu konfigurieren, eines der Verfahren nach Anspruch 1-11 durchzuführen.

## Revendications

1. Procédé mis en œuvre par ordinateur comprenant :
l'obtention, par un processeur d'un dispositif informatique à partir d'un mélangeur audio du dispositif informatique, de données audio émises par une application s'exécutant sur le dispositif informatique, les données audio comprenant des données non-métadonnées indicatives de segments audio de contenu émis par l'application et des métadonnées associées aux données audio et comportant un identifiant de type spécifiant un type de contenu, et dans lequel le contenu comprend aussi des parties visuelles ;
le fait de déterminer, par le processeur, si le type spécifié par l'identifiant de type des métadonnées associées aux données audio est un type de contenu qui est adapté à la génération ;
en réponse à la détermination que l'identifiant de type est d'un type qui est adapté à la génération, la détermination, par le processeur et pour la génération, d'une description des segments audio du contenu ; et
lors de l'émission des parties visuelles du contenu à afficher, l'émission, par le processeur, de la description des segments audio du contenu à afficher.

2. Procédé selon la revendication 1, dans lequel la description des segments audio du contenu comprend une transcription de l'audio parlé à partir des segments audio du contenu.

3. Procédé selon l'une quelconque des revendication 1 ou 2, dans lequel la description des segments audio du contenu comprend une description d'un audio non parlé à partir des segments audio du contenu.

4. Procédé selon la revendication 3, dans lequel l'audio non parlé comprend un bruit provenant d'une source particulière et la description du bruit provenant de la source particulière comprend une indication de la source particulière.

5. Procédé selon la revendication 4, dans lequel :
le bruit comprend un bruit animal provenant d'une source animale, ou
le bruit comprend un bruit environnemental provenant d'une source non animale.

6. Procédé selon l'une quelconque des revendications 1 à 5, dans lequel la détermination de la description des segments audio du contenu comprend l'exécution, par le processeur du dispositif informatique, d'un modèle appris par machine qui est entraîné pour déterminer des descriptions à partir des données audio pour déterminer la description des segments audio du contenu.

7. Procédé selon la revendication 6, dans lequel le modèle appris par machine comprend un modèle de reconnaissance vocale automatique de transducteur de réseau neuronal récurrent de bout en bout.

8. Procédé selon l'une quelconque des revendications 1 à 7, dans lequel la description comprend du texte indiquant un audio non parlé extrait des segments audio du contenu.

9. Procédé selon l'une quelconque des revendications 1 à 8, dans lequel la description comprend du texte identifiant une source humaine et une source non humaine pour différentes parties des segments audio du contenu.

10. Procédé selon l'une quelconque des revendications 1 à 9, dans lequel l'émission de la description des segments audio du contenu comprend l'émission de la description des segments audio du contenu sous la forme d'un élément graphique persistant distinct des parties visuelles du contenu et distinct d'une interface utilisateur graphique de l'application.

11. Procédé selon la revendication 10, comprenant également :
en réponse à la réception, par le processeur, d'une entrée utilisateur associée à l'élément graphique persistant, la modification d'une taille de l'élément graphique persistant pour afficher des descriptions précédentes ou ultérieures générées à partir des segments audio du contenu.

12. Dispositif informatique comprenant au moins un processeur configuré pour réaliser l'un quelconque des procédés selon les revendications 1 à 11.

13. Support de stockage lisible par ordinateur comprenant des instructions qui, lorsqu'elles sont exécutées, configurent un processeur d'un dispositif informatique pour réaliser l'un quelconque des procédés selon les revendications 1 à 11.
